# EUROPEAN PATENT APPLICATION

(11) **EP 1 136 905 A2**
(43) Date of publication of application: **26.09.2001**
(21) Application number: 01302483.1
(22) Date of filing: 19.03.2001
(51) Int. Cl.: G06F 3/023

(54) **Character input device and method**

(30) Priority: 17.03.2000 JP 2000075761; 21.03.2000 JP 2000078850; 21.03.2000 JP 2000078851
(71) Applicant: Seiko Instruments Inc., Chiba-shi, Chiba (JP)
(72) Inventor: Noguchi, Masahiko, Mihama-ku, Chiba-shi, Chiba (JP); Nosaka, Naokatsu, Mihama-ku, Chiba-shi, Chiba (JP); Ito, Takashi, Mihama-ku, Chiba-shi, Chiba (JP)
(74) Representative: Sturt, Clifford Mark

(57) **Abstract**

To provide an information processing device with superior portability with a minimum of hardware, which is capable of inputting characters both easily and effectively, an information processing method, and a storage medium. There is provided a character group display step for displaying a plurality of character groups at one time, a left right direction indication input unit for inputting left and right direction indication, an up down direction indication input unit for inputting up and down direction indication, a character group selection unit for moving a selected position in response to left and right direction indication input using the left right direction indication input unit and selecting one of the character groups displayed on the character group display unit, and a character selection unit for sequentially selecting and displaying one of the characters included in the character group selected by the character group selection unit in response to direction indication input from the up down direction indication input unit.

## Description

This invention relates to an information processing device such as mobile equipment including personal computers and portable telephones where character keys for inputting characters are displayed on a display screen, an information processing method, and a computer-readable storage medium storing a program for causing a computer to execute this method.

Conventionally, information communication made while on the move or to outside has mainly been voice information passing via a public telephone line network. However, as portable information communication terminals such as laptop computers and palmtop computers have become more widespread, information communication using characters has also become possible from anywhere. As such equipment has become smaller and lighter in weight, the providing of functions such as character input functions and functions for sending and receiving internet mail in personal organizers or portable telephones has become more common.

In a typical method for inputting characters (for example, the Japanese hiragana alphabet) with a related mobile information processing device such as a portable telephone, groups of characters such as "a", "ka", "sa" to "ra" and "wa wo un" are allotted to numeric input keys for "1" to "0". With this portable telephone, each character group of the 50 character Japanese syllabary and some alphabetic characters are assigned and displayed on each key. When characters are inputted at portable equipment such as this portable telephone, the operator then searches for keys corresponding to the characters it is wished to input and the desired character is selected and inputted by pressing this key once or a number of times. For example, when the character group for "a" corresponds to the key "1", the key "1" is pressed once if it is desired to input "a", and when it is wished to input "i", the key "1" is pressed twice. Characters for other character groups such as the character group for "ka" etc. can also be inputted using the same operation.

There is, however, the problem that it is necessary to provide a large number of keys (at least 10 keys) in a method where each of a plurality of keys is made to correspond to each of the respective character groups of the 50 character Japanese syllabary, which causes the device to be large. Further, the operator has to search for which key corresponds to a desired character, and when a key is pressed incorrectly, keys have to be pressed a large number of times (four times or more) which makes the operation complex.

In order to resolve the problems of the related art described above, it is the object of the present invention to provide an information processing device, a character input method, and computer-readable storage medium storing a program for executing this method on a computer which can bring about device miniaturization and which makes character input straightforward.

However, with the aforementioned small-type information communication terminals, the display and keyboard are limited to a certain size due to the importance of portability. In the case of personal organizers, there is no keyboard, and in the case of portable telephones, the keys are limited to the push-buttons used for inputting telephone numbers. Character input therefore cannot be said to be easy when compared to larger information communication terminals such as desktop computers, etc.

With, for example, portable telephones having a character input function, a display for the fifty syllabary is allotted to each row of an "a row" (strictly speaking this is an "a column" but here, convention is conformed to) to a "wa row" and one of five katakana within a row is then specified by pressing a button a number of times.

In one example, when the "a row" is allotted to "1", "a" can then be inputted by a user pressing "1" once, "i" can be inputted by pressing twice, "u" can be inputted by pressing three times, "e" can be inputted by pressing four times, and "o" can be inputted by pressing five times.

Similarly, the "ka row" to the "ra row" are allotted to buttons "2" to "9", and the "un row" and "wa row" are collectively allotted to "0". The desired characters can then be inputted by the user pressing a prescribed button a prescribed number of times.

In this input method, it is necessary for a user to move between buttons and make repeated pressing operations while being aware of which of the characters it is wished to input is at which number of which row, which makes the operation extremely difficult.

When the character it is wished to input is mistakenly gone past so that, for example, "1" is pressed four times rather than three times when it is intended to input, for example, "u", it is necessary to then press "1" four more times in order to cycle through the characters in the row in the order of "o"; "a", "i" and "u", and the operation is therefore extremely complex.

The above problem is even more striking for inputting numerals such as ",", ".", and "∼". Normally, these symbols are allotted to individual push-buttons as with kana, but the number of characters per button also becomes large as the types of symbols that can be inputted become large, and the same operation therefore has to be repeated by this number when erroneous operations are made. Even if an erroneous operation is made, it is necessary to continue pressing the same button a few times to a few tens of times in order to input a single character.

Further, in the case of kana, by abbreviating the "a row", and "ka row" etc. to the buttons, a suggestion is made as to which character is allotted to which button but this is difficult in the case of a symbol. It is therefore necessary for the user to already be aware of where with respect to which button (in the vicinity of which number button) the symbol it is wished to input is allotted.

Normally, it is not possible to accurately remember positions allotted to a few tens to a few hundreds of types of symbols. The operator therefore retrieves a method for inputting a desired character (which button is to be pressed, and how many times) using a separately prepared correspondence table, which requires time and effort by the operator.

With the related technology, a plurality of push-buttons etc. are required in order to input characters, which is a hindrance with regards to making the device small and light-weight. Further, individual buttons have to be of a size that is easy to physically press with a finger, and the fact that numerals such as "1" etc. and kana corresponding to the buttons such as the "a row" have to be displayed at the button "1" in a manner which is easy to see limits how small the individual buttons themselves can be made.

Further, in the related art, basically, (total number of characters capable of being inputted) = (total number of buttons) X (maximum number of button presses). This meant that in order to ensure that more types of characters could be inputted, the only alternatives were to increase the number of buttons or to increase the maximum number of button presses. However, increasing the number of buttons can make the device less portable and if the number of times of pressing the buttons is increased, this is detrimental to the operation of the device.

In order to resolve the problems of the related art described above, it is the object of the present invention to provide an information processing device which has superior portability, requires a minimum of hardware, and is capable of inputting characters both easily and effectively, an information processing method, and computer-readable storage medium storing a program for causing a computer to execute this method.

In order to solve the aforementioned problems and achieve the aforementioned object, according to a first aspect of the invention, an information processing device comprises character group display means for displaying a plurality of character groups at the same time, first direction indication input means and second direction indication input means for inputting a direction indication, character group selection means for selecting one of the character groups displayed by the display means by causing movement to a selection position in response to direction indication input by the first direction indication input means, and character selection display means for sequentially selecting one of characters included in the character group selected by the character group selection means in response to a direction indication input by the second direction indicating input means.

According to the first aspect of the invention, it is not necessary to provide a large number of keys corresponding to each character group, it is not necessary to find which keys correspond to the desired character, and it is no longer necessary to press a key a large number of times when a key is pressed in an erroneous manner.

An information processing device of a second aspect of the present invention is the information processing device of the first aspect of the present invention, further comprising alphabetic character display means for switching between upper case and lower case characters in response to a direction indication input by the second direction indication input means to display a plurality of alphabetic characters at once, and alphabetic character selection means for causing movement to a selected position in response to a direction indication input using the first direction indication input means, and selecting one among the alphabetic characters displayed on the alphabetic character display means.

According to the second aspect, it is also possible to switch between input of upper case and lower case alphabetic characters.

Also, an information processing method of a third aspect of the present invention comprises: a character group display step for displaying a plurality of character groups at one time, a first direction indication input step for inputting a direction indication, a character group selection step for causing movement to a selected position in response to a direction indication input in the first direction indication input step, and selecting one among the character groups displayed in the character group display step, a second direction indication input step for inputting a direction indication, and a character selection display step for sequentially selecting and displaying any one among characters included in the character group selected in the character group selection step, in response to a direction indication input in the second direction indication input step.

According to the third aspect of the invention, it is not necessary to provide a large number of keys corresponding to each character group, it is not necessary to find which keys correspond to the desired character, and it is no longer necessary to press a key a large number of times when a key is pressed in an erroneous manner.

An information processing method of a fourth aspect of the present invention is the character input method of the third aspect of the present invention, further comprising an alphabetic character display step for switching between upper case and lower case characters in response to a direction indication input in the second direction indication input step to display a plurality of alphabetic characters at once, and an alphabetic character selection step for causing movement to a selected position in response to a direction indication input in the first direction indication input step, and selecting one among the alphabetic characters displayed in the alphabetic character display step.

According to the fourth aspect, it is also possible to switch between input of upper case and lower case alphabetic characters.

An information processing device of a fifth aspect of the present invention for displaying character keys for inputting characters on a display screen comprises first display means for displaying character keys corresponding to kana positioned at an uppermost row of a fifty syllabary table at a display screen as a matrix, designating means for designating one character key of character keys displayed by the first display means, and second display means for displaying character keys corresponding to kana positioned at the same column as kana corresponding to character keys designated by the designating means at the fifty syllabary table at the display screen as a matrix.

According to the fifth aspect of the invention, the character keys are displayed divided between a two-deep hierarchical matrix so that an operator can effectively find and designate the required key. When there is only a small number of individual matrix elements (i.e. a small number of character keys), the display for displaying these keys can also be made small. Further, the need for hardware such as a keyboard or push-buttons etc. can be removed by inputting characters using software keys on a screen.

Further, an information processing method of a sixth aspect of the present invention, displaying character keys for inputting characters on a display screen comprises a first displaying step of displaying character keys corresponding to kana positioned at an uppermost row of a fifty syllabary table at a display screen as a matrix, a designating step of designating one character key of character keys displayed in the first displaying step, and a second displaying step for displaying character keys corresponding to kana positioned at a same column as kana corresponding to character keys designated in the designating step at the fifty syllabary table at the display screen as a matrix.

According to the sixth aspect of the invention, the character keys are displayed divided between a two-deep hierarchical matrix so that an operator can effectively find and designate the required key. When there is only a small number of individual matrix elements (i.e. a small number of character keys), the display for displaying these keys can also be made small. Further, the need for hardware such as a keyboard or push-buttons etc. can be removed by inputting characters using software keys on a screen.

The information processing device of a seventh aspect of the invention for displaying character keys for inputting characters on a display screen comprises storage means for classifying a plurality of character keys corresponding to symbols into a plurality of groups for storage, designating means for designating one of a plurality of groups stored in the storage means, and display means for displaying character keys classified into groups designated by the designating means at the display screen.

According to the seventh aspect of the invention, character keys corresponding to symbols are displayed divided between a plurality of pages that can be switched over so that an operator can effectively find and designate the required key. When there is only a small number of individual page elements (i.e. a small number of character keys), the display for displaying these keys can also be made small. Further, the need for hardware such as a keyboard or push-buttons etc. can be removed by inputting characters using software keys on a screen.

Further, the information processing method of an eighth aspect of the invention displaying character keys for inputting characters on a display screen comprises storing step classifying a plurality of character keys into a plurality of groups, designating step designating one of a plurality of groups stored in the storing step, and displaying step displaying character keys classified into groups designated by the designating step at the display screen.

According to the method of the eighth aspect, character keys corresponding to symbols are displayed divided between a plurality of pages that can be switched over so that an operator can effectively find and designate the required key. When there is only a small number of individual page elements (i.e. a small number of character keys), the display for displaying these keys can also be made small. Further, the need for hardware such as a keyboard or push-buttons etc. can be removed by inputting characters using software keys on a screen.

Moreover, with a storage medium cf a ninth aspect of the invention, the method disclosed in the third, fourth, sixth, or eighth aspects of the invention is stored as a program for causing a computer to implement this method. According to the ninth aspect, the program can be read by a computer because of storing the program for causing a computer to implement this method disclosed in the third, fourth, sixth, or eighth aspect of the invention, and a computer can therefore be caused to implement the method disclosed in the third, fourth, sixth, or eighth aspect of the invention.

Embodiments of the present invention will now be described by way of further example only and with reference to the accompanying drawings, in which:-
Fig. 1 is a view illustrating an example structure for an information processing device of the embodiment 1;
FIG. 2 is a view illustrating another example structure for an information processing device of the embodiment 1;
Fig. 3 is a block diagram showing a hardware configuration for the information processing device of the embodiment 1;
FIG. 4 is a block diagram functionally showing a configuration for the information processing device of the embodiment 1;
FIG. 5 is a view illustrating a hiragana input processing procedure for an information processing device of the embodiment 1;
FIG. 6 is a view illustrating a katakana input processing procedure for an information processing device of the embodiment 1;
FIG. 7 is a view illustrating an alphabetic character input processing procedure for an information processing device of the embodiment 1;
FIG. 8 is a view illustrating a scroll processing procedure for an information processing device of the embodiment 1;
FIG. 9 is a view illustrating another scroll processing procedure for an information processing device of the embodiment 1;
FIG. 10 is a view illustrating yet another scroll processing procedure for an information processing device of the embodiment 1;
FIG. 11 is a view illustrating another hiragana input processing procedure for an information processing device of the embodiment 1;
FIG. 12 is a view illustrating another katakana input processing procedure for an information processing device of the embodiment 1;
FIG. 13 is a view illustrating another alphabetic character input processing procedure for an information processing device of the embodiment 1;
FIG. 14 is a view illustrating a sentence input processing procedure for an information processing device of the embodiment 1;
FIG. 15 is a view illustrating a sentence input processing procedure for an information processing device of the embodiment 1;
FIG. 16 is a block diagram showing a hardware configuration for the information processing device of the embodiment of the present invention;
FIG. 17 is a block diagram functionally showing a configuration for the information processing device of the embodiment;
FIGs. 18 are views illustrating both schematically and conceptually an example of a character key set stored in the character key set storage unit at the information processing device of the embodiment;
FIGs. 19 are views illustrating changes in content displayed in the display 1604 while inputting the hiragana "ki" at the information processing device of the embodiment 2;
FIGs. 20 are views illustrating changes in content displayed in the display 104 while changing the type of characters inputted at the information processing device of the embodiment 2;
FIGs. 21 are views illustrating changes in content displayed in the display 1604 while inputting the English character "C" at the information processing device of the embodiment 2;
FIG. 22 is a viewillustrating changes in content displayed in the display 1604 while inputting the number "2" at the information processing device of the embodiment 2;
FIGs. 23 are views illustrating content displayed in the display 1604 while inputting kana in parallel in an information processing device of the present invention;
FIGs. 24 show examples of content displayed at the display 1604 while inputting romaji at the information processing device of the present invention;
FIGs. 25 are views illustrating changes in content displayed in the display 1604 while inputting the hiragana "ki" at the information processing device of the embodiment 3;
FIGs. 26 are views illustrating changes in content displayed in the display 1604 while inputting palatalized sounds at the information processing device of the embodiment 3;
FIGs. 27 are views illustrating changes in content displayed in the display 1604 while changing the hiragana character string "today" to the kanji character string "today (kanji)" at the information processing device of the embodiment 3; and
FIGs. 28 are views illustrating changes in content displayed in the display 1604 while inputting the semi-voiced consonant "pa" at the information processing device of the embodiment 3.

The following is a detailed description, with reference to the appended drawings, of an information processing device, a character input method, and a computer-readable storage medium storing a program for executing this method on a computer of this invention.

### (Embodiment 1)

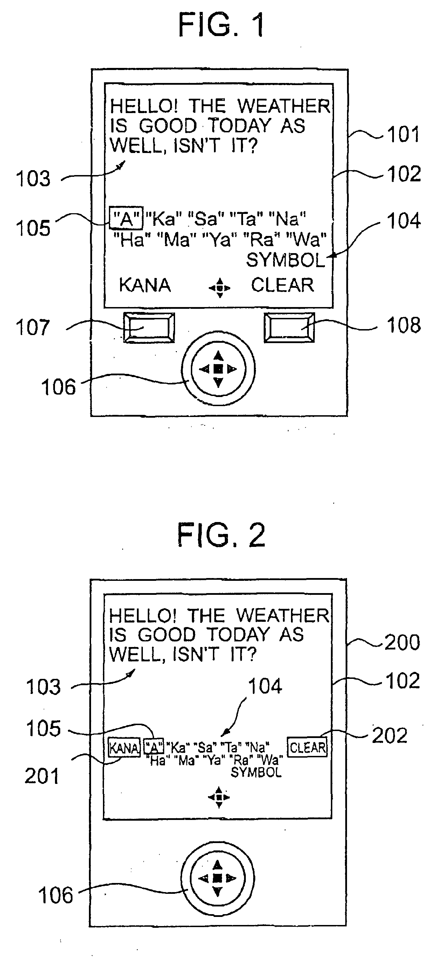

FIG. 1 is a view illustrating an example structure for an information processing device of the embodiment 1. In FIG. 1, a display screen 102, a four-way controller 106, character type select key 107 and a clear key 108 are provided in the information processing device 101. A display screen 102 is an LCD display, such as an organic electroluminescence display etc. and comprises an input character display unit 103, a row display unit 104, cursor display unit 105, etc. Characters (sentences) input by an operator are displayed on the input character display unit 103, and a plurality of character groups of each character group of the 50 character syllabary of hiragana and katakana ("a", "ka" "sa" to "wa") and symbols, etc. are displayed on the line display unit 104. A cursor 105 indicates a selected character group or character. A four-way controller 106 makes it possible to move a selected position (cursor 105), or as a key for switching between selected characters enables an operator to move the cursor 105 to the left and right, or to switch between selected characters. Instead of the four-way controller 106, it is also possible to use another device for operating the cursor, such as a joystick or a track stick etc.

The character type select key 107 can select Japanese hiragana characters, Japanese katakana characters, or alphabetic characters (for example, English, French, German, Russian, etc.). The characters can also be Korean or Arabic characters. By pressing the character type select key 107, the operator can switch between the character type of character groups displayed on the line display unit, select a desired character type and input them. A clear key 108 is a key for deleting input characters, and an operator can delete input characters one at a time by pressing the clear key 108. A wristwatch-type information processing terminal equipped with a multitude of functions such as a portable telephone/PHS mobile function, PDA function, GPS receiver function and digital camera function, etc., or a portable telephone/PHS mobile unit or PDA etc. can be considered for the information processing terminal 101. Mounting means such as a strap for wearing a wristwatch, etc. are provided in the case of a wristwatch-type information processing device. In addition to the display for character input, displays for the functions and operating mode of the information processing device 101 are also shown at the input screen 102. It is also possible to select characters by displaying a character type select key 201 and a clear key 202 of the information processing device 200 shown in Fig. 2 on a display screen 102 and moving the cursor 105 using the four-way controller 106, without physically providing the character type select key 107 and the clear key 108

### (Information processing device configuration)

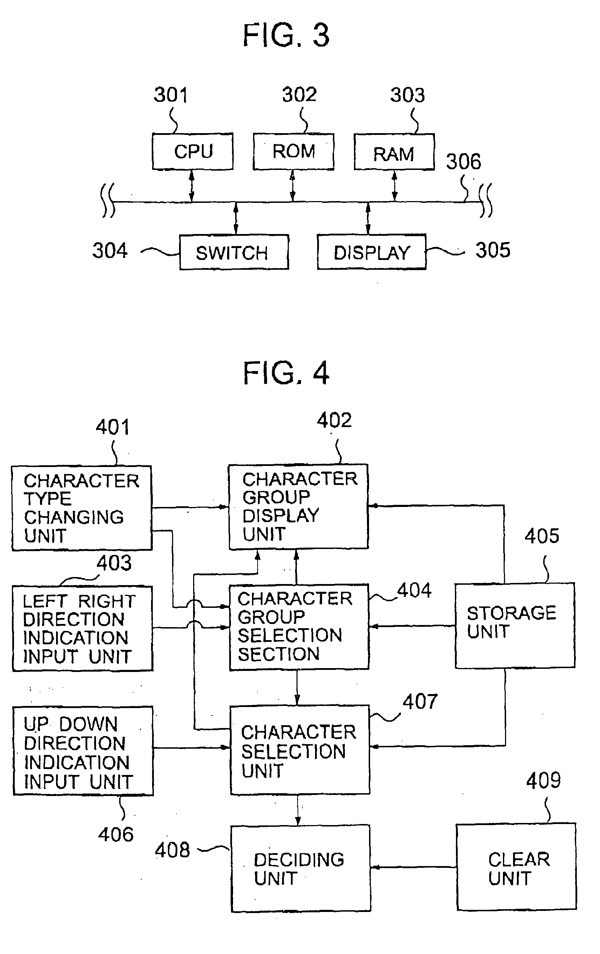

Next, a description is given of the hardware configuration of the information processing device 101 according to the embodiment 1. FIG. 3 is a block diagram showing an example hardware configuration for an information processing device 101 of the embodiment 1.

In the block diagram of Fig. 3, reference numeral 301 is a CPU for controlling the overall system, 302 is a ROM storing a boot program etc., 303 is a RAM used as a work area by the CPU, 304 is a switch (key) for an operator to perform input, and 305 is an organic EL display or a liquid crystal display for carrying out display. Further, there is also shown a bus 306 for connecting each of the parts. The display 305 includes the display screen 102 described in FIG. 1, and the switch 304 includes the four-way controller 106 shown in FIG. 1, the character type select key 107 and the clear key 108.

### (Functional configuration of the information processing device)

Next, a description is given of the functional configuration of the information processing device 101 according to the embodiment 1. FIG. 4 is a block diagram functionally showing a configuration of the information processing device 101 of the embodiment 1. In FIG. 4, the information processing device 101 comprises a character type changing unit 401, a character group display unit 402, a left right direction indication input unit 403, a character group select unit 404, a memory section 405, an up down direction indicating input unit 406, a character selection unit 407, a deciding unit 408 and a clear unit 409. The character type changing unit 401 changes a selection of character type every time the character type select key 107 in FIG. 1 is pressed, and gives notification of the selected character type to the character group display unit 402 and the character group selection unit 404. In addition to Japanese hiragana characters and Japanese katakana characters, the character type can be symbols such as "?" and "O", and alphabetic characters (for example, English, French, German, Russian, etc.). The characters can also be Korean or Arabic characters. The functions of the character type changing unit 401 can be implemented by the CPU 301, the ROM 302, the RAM 303 and the switch 304 shown in FIG. 3. The character group display unit 402 inputs information of some character groups belonging to that character type from the memory section 405, in response to a character type notified from the character type changing unit 401, and displays this information. For example, in the case of hiragana, the character groups are made up of each of the character groups for the 50 character Japanese syllabary, and symbols, and characters "a", "ka" "sa" - "wa" and "symbol" representing each character group are displayed. Further, the cursor 105 is displayed at the position of the character group notified from the character group select unit 404, and characters notified from the character selection unit 407 are displayed inside the cursor 105 enlarged, emphasized, reversed, with half-tone dot meshing, or flashing, etc. The functions of the character group display unit 402 can be implemented by the CPU 301, the ROM 302, the RAM 303 and the display 305 shown in FIG. 2. A plurality of character groups and characters are stored in advance in the memory section 405. The functions of the memory section 405 can be implemented by storage media such as the ROM 302, the RAM 303 shown in Fig.3 and a mechanism for controlling them. The character group selection unit 404 moves the cursor 105 in response to two, i.e. left and'right, direction indications from the left and right direction indication input unit 403, selects one of the displayed character groups (overlaps the cursor 105 on the display of the character group), and notifies the character group display unit 402 and the character selection unit 407 of the selected character group. The functions of the character group selection unit 404 can be implemented by the CPU 301, the ROM 302 and the RAM 303 shown in FIG.3. The left and right direction indication unit 403 is input with two, namely left and right, direction indications from an operator, and outputs the direction indications to the character group selection unit 404. The function of the left right direction indication input unit 403 can be implemented by the switch 304 (the left and right keys of the four-way controller 106 shown in FIG. 1) and the control mechanism described in FIG. 3. The up and down direction indication unit 406 is input with two, namely up and down, direction indications from an operator, and outputs the direction indications to the character selection unit 407. The function of the up and down direction indication input unit 406 can be implemented by the switch 304 (the up and down keys of the four-way controller 106 shown in FIG. 1) and the control mechanism described in FIG. 3. In response to a character group notified from the character group selection unit 404 and two, namely up and down, direction indications from the up and down direction indication input unit 406, the character selection unit 407 selects on character belonging to that character group, and notifies the selected character to the character group display unit 402 and the deciding unit 408. The functions of the character selection unit 407 can be implemented by the CPU 301, the ROM 302, and the RAM 303 shown in FIG. 3. When a decide key (a key in the center of the four-way controller 106) is pressed, the deciding unit 408 decides characters notified from the character selection section, specifically characters displayed inside the cursor 105, as input characters, and additionally displays the decided characters on the input character display unit 103 shown in Fig. 1. The functions of the deciding unit 408 can be implemented by the CPU 301, the ROM 302, the RAM 303 and the switch 305 shown in FIG. 3. When the clear key 108 shown in Fig. 1 has been pressed, the clear unit 409 clears (deletes) the most recently input character. The functions of the clear unit 409 can be implemented by the CPU 301, the ROM 302, the RAM 303 and the switch 304 shown in FIG. 3. It is also possible to display a selection position by simply displaying selected characters in bold or emphasized style, without displaying the cursor 105.

### (Information processing device processing procedure)

Next, a description is given of the content of character input processing carried out by the information processing device 101 according to the embodiment 1.

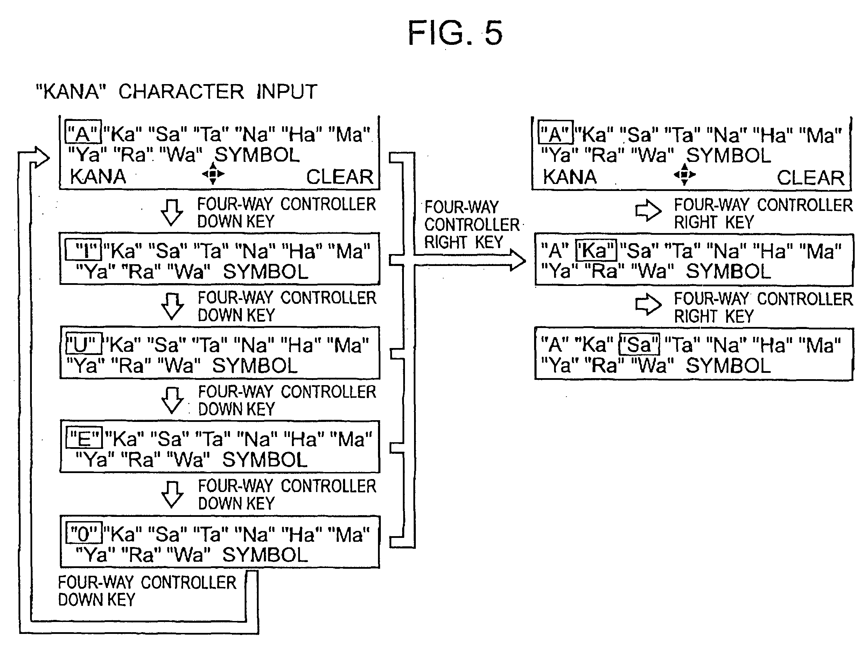

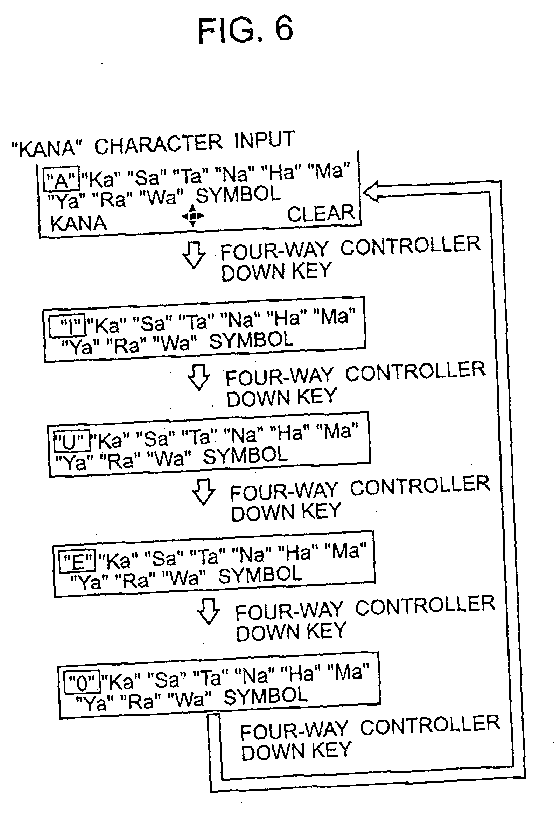

First, character input processing in the case where the character type is hiragana (hiragana input processing) will be described. FIG. 5 is a drawing for describing the hiragana input processing procedure of the information processing device 101 of the embodiment 1. In Fig. 5, first of all, if the cursor 105 is at to the position of the "a" character group and the "a" character group is selected, the characters in the "a" character group that are inside the cursor 105 is displayed in emphasized style. These characters are cyclically changed in order in both directions by pressing the up and down keys on the four-way controller 106 (for example, in a direction advancing through "a, i, u, e, o, a, i, u, e, o" when the down key is pressed, or in direction advancing through "o, e, u, i, a, o, e, u, i, a" when the up key is pressed), and displayed. The characters being displayed are then selected. Characters are also selected in a similar manner for the other character groups. Also, by pressing the left and right keys on the four-way controller 106, the cursor is moved cyclically in order in both directions (for example, advancing in the order "a,ka,sa - wa, symbols" when the right key is pressed, and advancing in the order "symbols, wa - sa, ka, a" when the left key is pressed), and each character group is sequentially selected. Also in the case where the character type is katakana, as shown in Fig. 6, processing is carried out in the same way as for hiragana.

Next, character input processing in the case where the character type is alphabetic characters (alphabetic input processing) will be described.

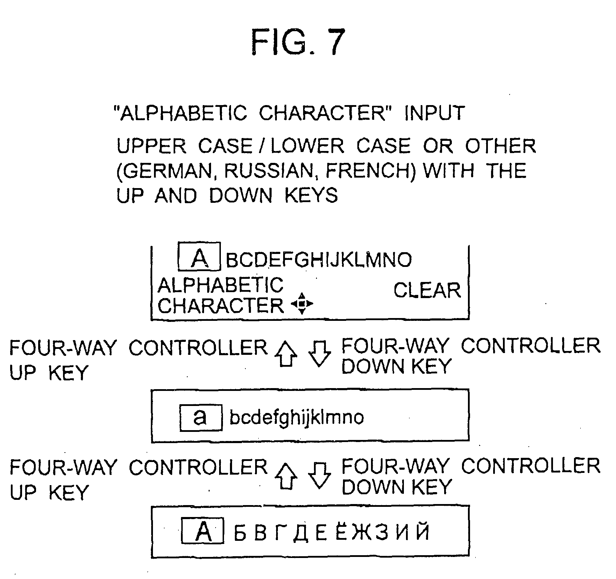

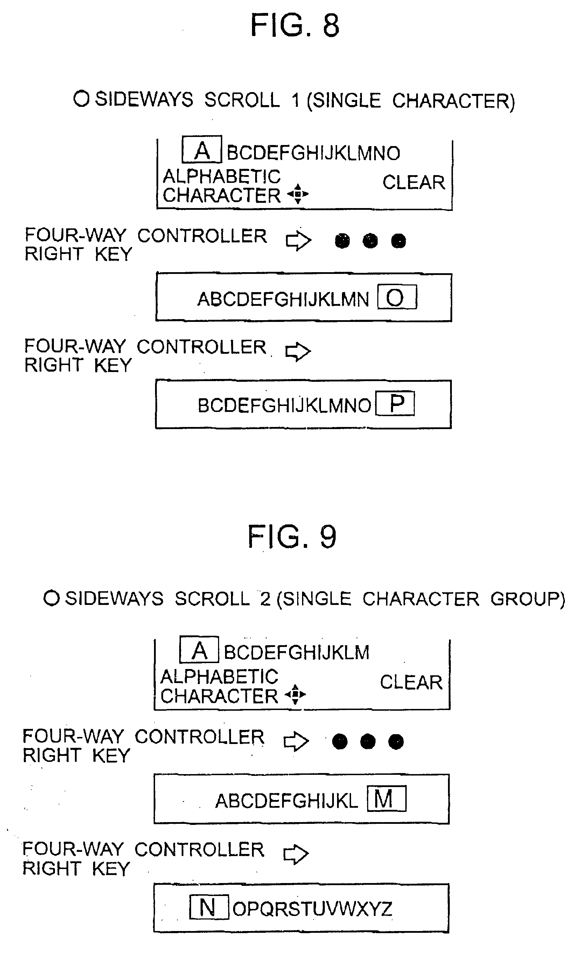

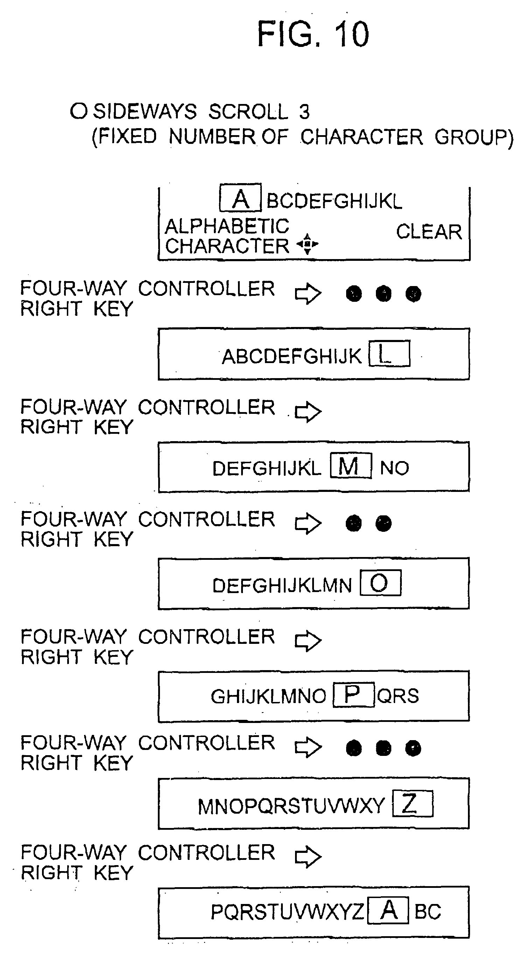

FIG. 7 is a drawing for describing the alphabetic input processing procedure of the information processing device 101 of the embodiment. In Fig. 7, first of all a number of characters of the alphabet are displayed in a single row, and the cursor 105 is displayed above one of the displayed characters. The cursor 105 is moved sequentially in both the left and right directions using the left and right keys, and a character overlapped by the cursor becomes a selected character. Here, in the case where all alphabetic characters are not displayed at the same time, the characters are displayed one after an other by scrolling. For example, as shown in Fig. 8, they can be scrolled one by one. In this case, if the cursor 105 is moved to the right side "O", and then the right key is pressed again, each of the displayed characters is moved one place to the left and "P" is displayed. Also, as shown in Fig. 9 it is possible to scroll in line units. In this case, if the cursor 105 is moved to the right side "M", and then the right key is pressed again, the characters "N" to "Z" are displayed. Also, as shown in Fig. 10, it is possible to scroll in units of fixed characters. In this case, if the cursor 105 is moved to the right side "L", and then the right key is pressed again, each of the displayed characters is moved a fixed amount to the left (three places in the drawing) and the subsequent characters "MNO" are displayed. In the following, similarly, every time the cursor 105 is moved to the right end, the displayed characters displayed are scrolled every fixed amount. When the cursor 105 has reached as far as "Z" characters appear cyclically from "A". Conversely, scrolling is also similarly carried out when pressing the left key and advancing the cursor 105 to the left. In this alphabetic input processing, as shown in Fig. 7, upper and lower case characters are switched by pressing the up and down keys, such that upper case characters are displayed if the up key is pressed, and lower case characters are displayed if the down key is pressed. It is also possible to switch sequentially between a number of types of alphabet, such as English, French, German, Russian, Korean and Arabic, using the up and down keys. With the example in the drawing, in the case where upper case English characters are being displayed, if the down key is pressed display switches to lower case English characters, and if the down key is pressed again, display switches to Russian characters. Conversely, if the up key is pressed, display switches from Russian characters to lower case English characters, and if the up key is pressed again, to upper case English characters.

Next, a description is given of another example of hiragana input processing.

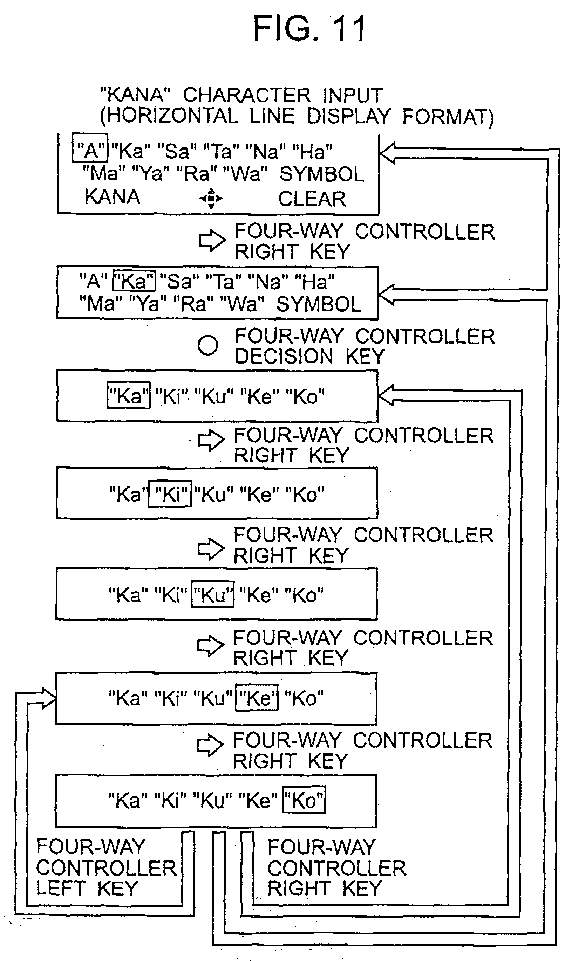

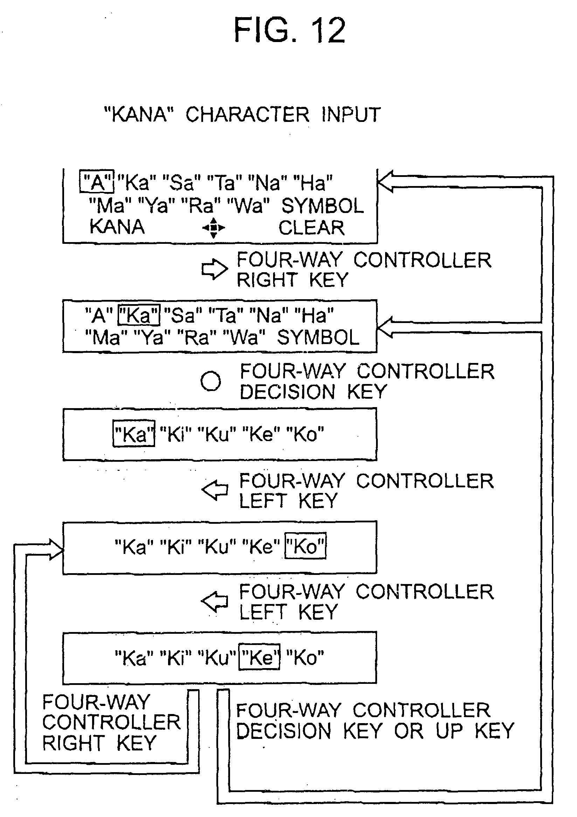

In this hiragana input processing method, a number of characters included in a selected character group are displayed at the same time, and the cursor 105 is moved to select one of these characters. FIG. 11 is a drawing for describing the other hiragana input processing procedure of the information processing device 101 of this embodiment. In Fig. 11, first of all in the case where the cursor 105 is on the character group "a", if the right key is pressed the cursor is moved onto the "ka" character group next on the right. The cursor 105 is then moved to the left and right in response to pressing of the left and right keys. Here, if a decide key in the middle of the four-way controller 106 is pressed, the group on which the cursor 105 is located is selected, display of each character group is deleted and a plurality of characters included in the selected character group are displayed. For example, if the cursor 105 is positioned on the character group "ka", "ka, ki, ku, ke, ko" are displayed by pressing the decide key. The cursor 105 is then displayed above one of the characters. The cursor 105 is then moved to the left and right in response to pressing of the left and right keys. If the right key is pressed when the cursor 105 is above the right end character, the cursor 105 rolls round to the left end. Specifically, if the right key is pressed when the cursor 105 is on "ko" at the right end, the cursor 105 rolls round to "ka" at the left end. Similarly, if the left key is pressed when the cursor 105 is above the left end character, the cursor 105 rolls round to the right end. Specifically, if the left key is pressed when the cursor 105 is on "ka" at the left end, the cursor 105 rolls round to "ko" at the right end. Here, if the decide key is pressed, the character at the position where the cursor 105 is located is decided to be the input characters, display of characters is deleted and the character groups are displayed again. Here, if the up key is pressed, and not the decide key, character input is not performed, display of characters is deleted and the character groups are displayed again. When returning to the display of the character groups, it is also possible for the cursor 105 to be displayed on a character group "ka", which is the selected character group, or to display the cursor 105 on the character group "a", which is the first character group. As shown in Fig. 12, it is possible to carry out processing in a similar manner for katakana.

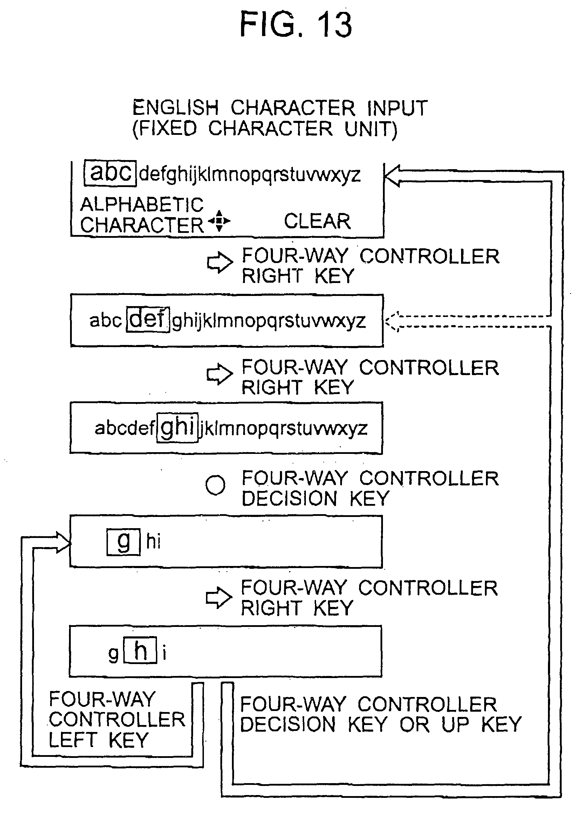

Next, a description is given of another example of alphabetic input processing. With this alphabetic input method, a number of alphabetic characters are made into a group, and a number of groups are made (such as an abc group, a def group), and first of all the number of groups are displayed at the same time and one is selected, the number of characters included in the selected group are displayed at the same time, and the cursor 105 is moved to select one of these characters. FIG. 13 is a drawing for describing the other alphabetic input processing procedure of the information processing device 101 of this embodiment. In Fig. 13, first of all in the case where the cursor 105 is on the character group "abc", if the right key is pressed the cursor is moved onto the "def" character group and then onto the "ghi" character group. The cursor 105 is then moved to the left and right in response to pressing of the left and right keys. Here, if a decide key is pressed, the group on which the cursor 105 is located is selected, display of each character group is deleted and a plurality of characters included in the selected character group are displayed. For example, if the cursor 105 is positioned on the character group "ghi" "ghi" is displayed by pressing the decide key. The cursor 105 is then displayed above one of the characters. The cursor 105 is then moved to the left and right in response to pressing of the left and right keys. If the right key is pressed when the cursor 105 is on "i" at the right end, the cursor 105 rolls round to the character "g" at the left end. Also, if the left key is pressed when the cursor 105 is on the character "g" at the left end, the cursor 105 rolls round to the character. "i" at the right end. Here, if the decide key is pressed, the character at the position where the cursor 105 is located is decided to be the input character, display of characters is deleted and the character group is displayed again. Also, if the up key is pressed, and not the decide key, character input is not performed, display of characters is deleted and the character groups are displayed again. When returning to the display of each of the character groups, it is also possible for the cursor 105 to be displayed on the selected character group "ghi", or to display the cursor 105 on the first character group "abc".

Next, a description is given of sentence input processing for creating a sentence by mixing various characters together.

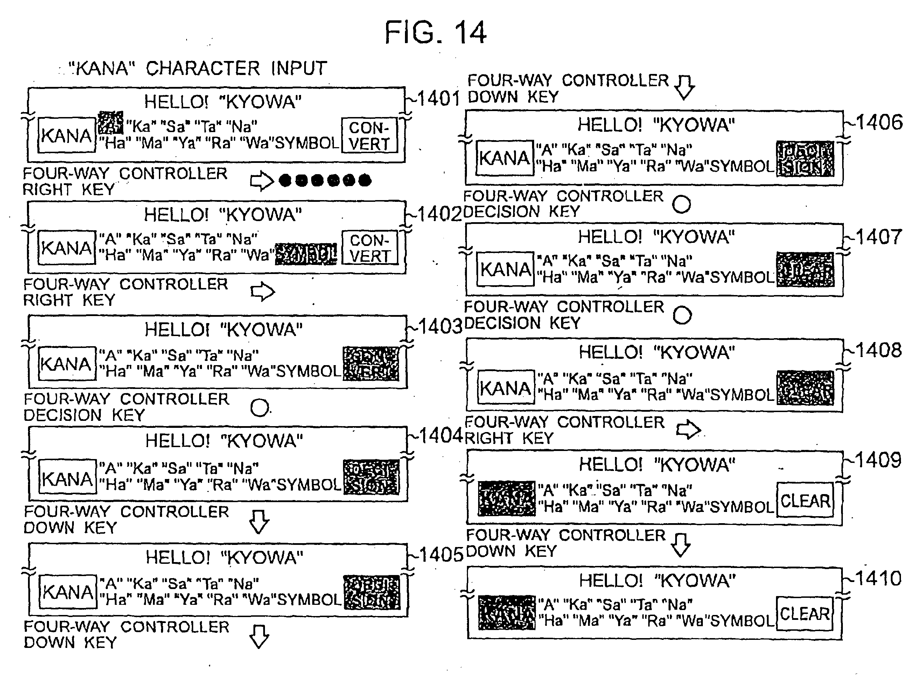

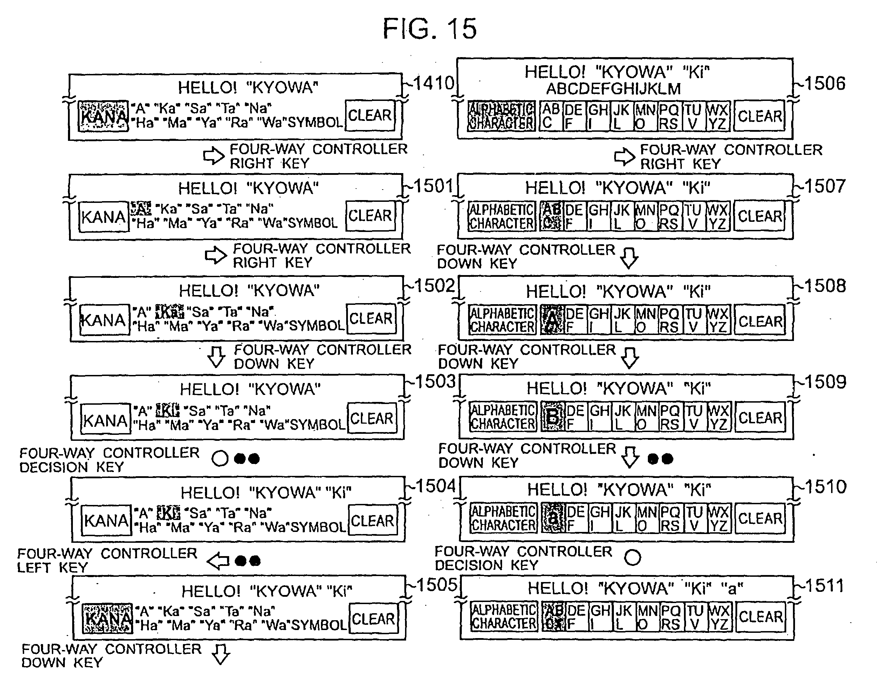

Fig. 14 and Fig. 15 are drawings for describing the sequence of a sentence input processing procedure for an information processing device of the embodiment 1. In Fig. 14, first of all characters saying "Hello!" are input, a section saying "today" is input but not yet confirmed, and the cursor 105 is positioned on the "a" character group (1401 in Fig. 14). Here, if the right key is pressed, the cursor 105 is moved across the symbol group (the symbol group being displayed as "symbol" on the display) (1402 in the drawing) to the position where "convert" is displayed. Next, if the decide key is pressed, the hiragana representation of "kyowa" is converted to a kanji representation with the same pronunciation as "kyowa", meaning today, and the display of "convert" is changed to display of "decide" (1404 in the drawing). Next, if the down key is pressed, display is converted to another kanji representation with the same pronunciation as "kyowa" (1405), and if the down key is pressed again the display returns to the original hiragana representation of "kyowa" (1406 in the drawing). Next, if the decide key is pressed, input of the hiragana representation of "kyowa" is confirmed, and display of "decide" is changed to display of "clear" (1407 in the drawing). If the decide key is then displayed, one of the input characters is deleted (1408 in the drawing). If the right key is then pressed, the cursor 105 is rolled round onto the display of "kana" (1409 in the drawing). Next, if the down key is pressed, display of the "kana" in hiragana characters is changed to display of "kana" in half-sized katakana characters, and display of the character group is also changed to half-sized katakana characters (1410 in the drawing). Moving on to Fig. 15, if the right key is then pressed, the cursor 105 is moved onto the character group "a" to the right (1501 in the drawing). If the right key is then pressed again, the cursor 105 is moved onto the character group "ka" one more to the right (1502 in the drawing). Here, if the down key is pressed, display of the "ka" group is changed to display of the "ki" group (1503 in the drawing). If the decide key is then pressed, the character "ki" is additionally input (1504 in the drawing). If the left key is then pressed, the cursor 105 is moved to the left. If the down key is pressed once the cursor is over the display of "kana" (1505 in the drawing) , display is switched from "kana" to "English Characters", and the display of each character group is switched to display of an English character group. If the right key is then pressed, the cursor 105 is moved onto the group "ABC" next on the right (1507 in the drawing). If the down key is then pressed, display of the "ABC" group is changed to display of the character "A" (1508 in the drawing). If the down key is then pressed again, display passes through "B" (1509 in the drawing) and "a" is displayed (1510 in the drawing). Here, if the decide key is pressed, the character "a" is input, and display is switched to the "ABC" group (1511 in the drawing).

As described above, according to the embodiment 1, since there are provided a character group display unit 402 for displaying a plurality of character groups at the same time, a left right direction indication input unit 403 for inputting left and right direction indication, an up down direction indication input unit 406 for inputting up and down direction indication, a character group selection unit for moving a selected position in response to left and right direction indication input using the left right direction indication input means and selecting one of the character groups displayed on the character group display unit 402, and a character selection unit 407 for sequentially selecting and displaying one of the characters included in the character group selected by the character group selection unit, it is not necessary to provide a large number of keys corresponding to each character group, it is not necessary to find which keys correspond to the desired character, and it is no longer necessary to press a the keys a lot of times when a key is pressed in an erroneous manner. The device can therefore be miniaturized and character input is straightforward.

Also, with the embodiment 1, since the character group display unit 407 switches between upper case and lower case characters in response to up and down direction indication input from the up down direction indication unit 406 and displays a number of alphabetic characters at the same time, the character group selection unit moves to a selected position in response to left and right direction indication input using the left right direction indication input unit 403 and selects one of the alphabetic characters displayed on the character group display unit 402, and the deciding unit 408 decides that a selected alphabetic character is an input character, it is possible to perform input by simply switching between upper case and lower case characters, and thus character input is made easier.

According to the embodiment 1, by enlarging and emphasizing selected character groups and characters, selected character groups and characters can easily be confirmed and character input is therefore straightforward. Further, when this embodiment is applied to an information processing device capable of being worn on a persons arm, this device can be made particularly small as a result of the number of keys being reduced and can therefore easily be worn on a persons arm. Further applications of the information processing device 101 are, for example, ① in a portable telephone/PHS mobile unit, ② in a FDA, and ③ in a wristwatch-type information processing device.

The computer program for implementing the character input method of the aforementioned embodiment 1 can be stored on portable storage media such as magnetic discs such as floppy discs, etc., semiconductor memory (including those built-into cartridges and PC cards etc.) such as ROM, EPROM, EEPROM, and flash ROM, CD-ROMs and DVDs, and magneto-optical discs. Functions for implementing the aforementioned character input method can then be provided at this information processing device by installing (it may be installed through personal computer) the program recorded on this storage media in ROM, RAM or a hard disc etc. built-into the information processing device.

This program can also be transmitted via a network such as a LAN, WAN, or the Internet, etc. for installation in a storage media of the information processing device. This program is by no means limited to a single configuration, and may also be distributed between a plurality of modules or libraries, or may function in cooperation with a separate program such as an OS.

### (Embodiment 2)

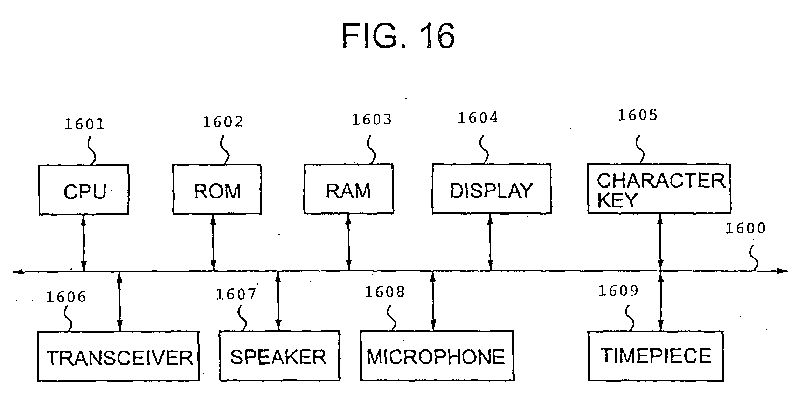

First, a description is given of a hardware configuration of the information processing device for an embodiment 2 of the present invention. FIG. 16 is a block diagram showing a hardware configuration for the information processing device of the embodiment 2.

FIG. 16 shows a CPU 1601 for controlling the overall system, ROM 1602 for storing programs etc. executed by the CPU 1601, and RAM 1603 used as a work area for the CPU 1601. Further, there is also shown a display 1604 for displaying character keys and a four-way controller 1605 for moving the cursor and deciding the position of the cursor. Also shown is a transceiver 1606 for sending and receiving waves to and from a relay station, a speaker 1607 for converting an electrical signal inputted from the transceiver 1606 to speech for output, and a microphone 1608 for converting speech inputted by an operator into an electrical signal for output to the transceiver 106. Also shown are a timepiece 1609 for holding the current time, current date and a calendar etc., and a bus 1600 for connecting each of the parts. The information processing device of this embodiment both develops and improves upon wristwatches of the related art. The external appearance is similar to a wristwatch, with a portion corresponding to a dial being arranged on a rectangular liquid crystal display, and a current time, current date, and calendar etc. being displayed on this screen. However, in addition to the timepiece function, this device is also equipped with a voice information communication function, i.e. a function corresponding to a related portable telephone. When this device functions as a telephone, numeric keys from "1" to "0"'are displayed at the display 1604 and a desired telephone number can be inputted by designating keys in sequence using the four-way controller 1605 provided at the bottom of the display 1604. Further, a portion of the display 1604 can be opened and closed using a hinge so that communication can be carried out in the same manner as with a telephone using a built-in speaker 1607 and microphone 1608. Further, in addition to the timepiece and telephone functions, an information communication function employing characters, i.e. a so-called mail terminal function, is also provided. When this device functions as a mail terminal, various character keys for kana (hiragana and katakana), alphanumeric characters and symbols, etc., are displayed at the display so that the desired sentence can then be made by using characters corresponding to each key by designating keys in a sequential manner. Character string data can therefore also be sent with the waves of the portable telephone by the transceiver 1606, and conversely, transmitted character string data can be received.

Next, a description is given of the functional configuration of the information processing device of the embodiment 2 of the present invention.

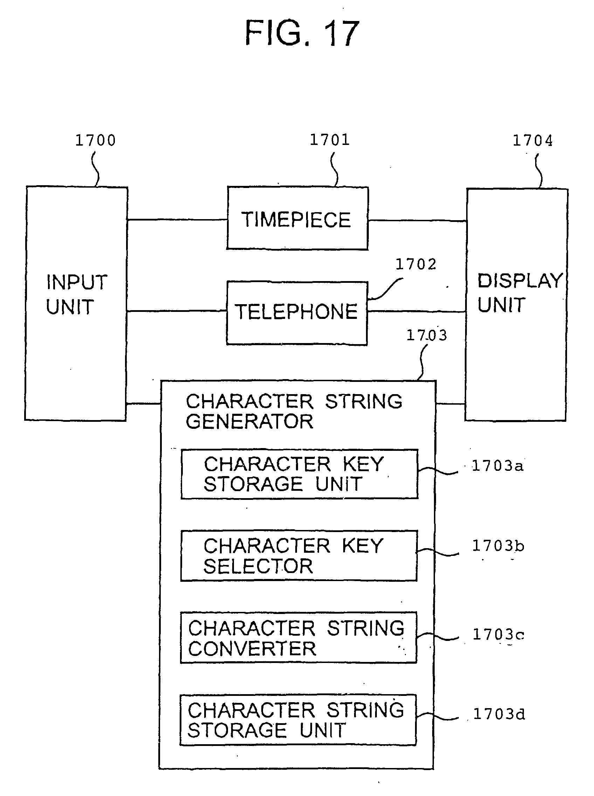

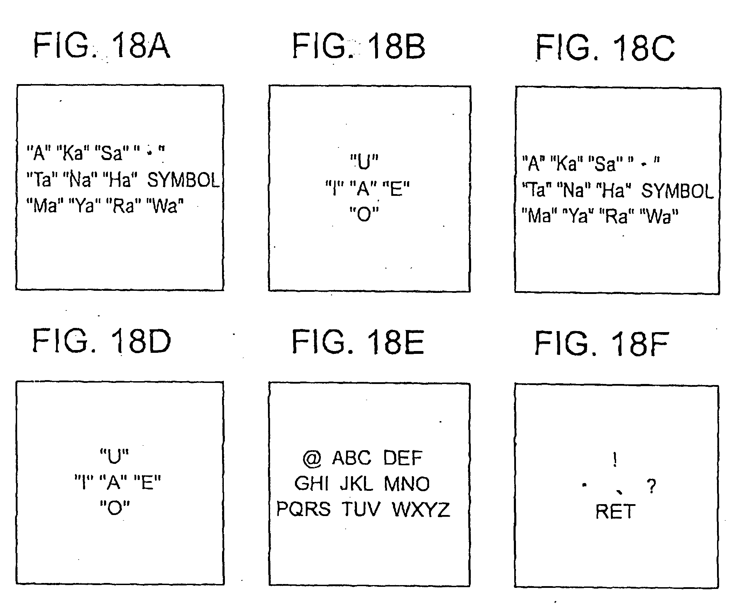

FIG. 17 is a block view functionally showing the configuration of the information processing device of the embodiment 2. In FIG. 17, the information processing device of this embodiment has a structure including an input unit 1700, a timepiece 1701, a telephone 1702, a character string generator 1703 and a display unit 1704. The character string generator 1703 has a structure including a character key set storage unit 1703a, a character key set selector 1703b, a character string converter 1703c, and a character string storage unit 1703d. The input unit 1700 is for inputting various characters such as kana, alphanumeric characters and symbols and inputting various instructions such as character string conversion or switching over of the input character string type using a circular four-way controller 1605 located at the bottom of the display 1604. The four-way controller 1605 combines the functions of the up, down, left and right arrow keys of a keyboard for, for example, a desktop computer, and a confirm key. i.e. the cursor moves up and down the display 1604 when the upper end or lower end of the four-way controller 1605 is pressed, moves horizontally when the left end or right end of the four-way controller 1605 is pressed, and the character key at the cursor position is designated at the processing target when the central portion of the four-way controller 1605 is pressed. The timepiece 1701 has functions for holding the current time, current date and a calendar, etc, to be designated for displaying at the display 1604, with respect to the display unit 1704 described later. The telephone 1702 instructs a display unit 1704 described later to display numeric keys for inputting telephone numbers and has a function for transmitting and receiving information such as speech information and character information using radio waves, but in either case, this is not content central to the present invention and a detailed description is omitted. The character string generator 1703 includes a character key set storage unit 1703a, a character key set selector 1703b, a character string converter 1703c, and a character string storage unit 1703d. The character key storage unit 1703 stores predefined character key combinations and their arrangement in a ROM 1602. FIG. 18 is a view illustrating, both schematically and conceptually, an example of a character key set stored in the character key set storage unit 1703a. In the drawings, "a(hiragana)", "a(katakana)" and "ABC" etc. are respective character keys, with a plurality of character keys being arranged in a matrix comprising a plurality of rows and columns. The character key set selector 1703b selects character sets from the character key set storage unit 1703a in accordance with instructions from the operator. For example, a character key set of FIG. 18A is selected when an instruction designating the start of the making of a sentence by a user is inputted. The display unit 1704 described later is then instructed to display various character keys corresponding to kana, alphanumeric characters and numerals in accordance with the definition of the selected character set. A sentence can then be inputted using the desired characters by sequentially designating character keys displayed on the screen using the four-way controller 1605 of the input unit 1700. The character string converter 1703c converts character strings inputted in this manner into other character strings as instructed, by referring to a conversion dictionary not shown. A typical example would be a conversion from a hiragana character string to a kanji (Chinese character) character string. The character string storage unit 1703d stores a character string inputted from the input unit 1700 or a character string converted by the character string converter 1703c in the above manner sequentially in the RAM 1603. The display unit 1704 displays the current time and type of character keys etc. on the display 1604 in accordance with instructions from each part. The input unit 1700, timepiece 1701, telephone 1702, character string generating unit 1703 and display unit 1704 then implement the function of each of the parts by having the CPU 1601 execute instruction processing in accordance with a program stored in the ROM 1602.

Next, a detailed description of a process for making character strings with the information processing device of the embodiment of the present invention is given taking an example where a sentence "Yesterday was Rachmaninov, 2 CDs" is made.

### (1) Inputting kana (unvoiced)

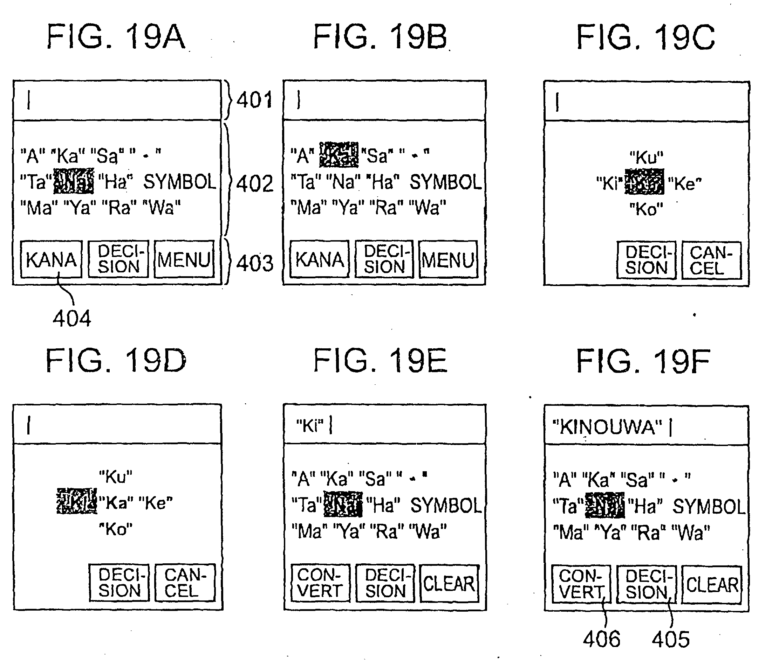

FIG. 19 is a view illustrating changes in content displayed in the display 1604 while inputting hiragana at an information processing device of the embodiment 2. First, a display screen for directly after commencement of processing for generating a character string at the information processing device of the embodiment is shown in FIG. 19A. In FIG. 19A, numeral 401 is an input character display area for displaying undetermined character strings converted by the character string converter 1703c and confirmed character strings stored in the character string storage unit 1703d. Further, numeral 402 represents a character key display area, and at this time, characters keys corresponding to the hiragana of "a", "ka", "sa", "ta", "na", "ha", "ma", "ya", "ra" and "wa" positioned at the uppermost row of the table for the 50 syllabary are displayed in a matrix shape composed of a plurality of rows and columns in accordance with a definition of FIG. 18A selected by the character key set select unit 1703b. The home position (initial position) of the cursor is in the vicinity of the center of the matrix and in this example, this is the position of the "na" key. The key at the cursor position is displayed in a reversed manner. Further, numeral 403 is a function key display area and displays a function key for inputting various instructions to this device. Numeral 404 is an input character type key, for displaying the type (in this example this is "kana", i.e. hiragana) of character key displayed at the character key display area 402 and, as is described later, the input character type can be changed by operating this key. In the situation in FIG. 19A, when the upper end of the four-way controller 1605 is pressed once, the cursor moves from the "na" key to the "ka" key, and the display screen becomes as shown in FIG. 19B. Further, when the central part of the four-way controller 1605 is pressed in this situation, the character key set selector 1703b selects a character key set composed of hiragana positioned at the same column as the hiragana "ka" of the fifty syllabary, i.e. "ka", "ki", "ku", "ke" and "ko", and requests the display unit 1704 to display these characters. FIG. 19C shows the display screen immediately after the display unit 1704 updates the character key display area 402 in accordance with the definition of the newly selected character key set. The cursor is displayed at the home position, i.e. at the position of the "ka" key at the center of the matrix. When the left end of the four-way controller 1605 is pushed once in this state, the cursor moves from "ka" to "ki", and the display screen becomes as shown in FIG. 19D. When the central part of the four-way controller 105 is pressed in this state, as shown in FIG. 19E, the katakana "ki" is displayed at the input character display area 401. and the content of the display at the character key display area 402 is returned to the initial state of FIG. 19A. Each time an input for a character finishes, the content displayed at the character key display area 402 . is automatically returned to the first layout (shown in FIG. 19A and FIG. 19B) from the second layout (shown in FIG. 19C and FIG. 19D) and the cursor is also returned to the home position. An operator can therefore be aware of where in which layout the cursor currently is positioned and therefore does not become confused and can continue to input new characters. It may also be preferable to have the content displayed at the character key display area 402 remain at the second layout so as not to have to worry about automatically returning to the first layout when kana in the same column of the fifty syllabary table are to be inputted consecutively, such as with, for example, "ki ki" and "ki ka ku". In the following, the cursor can be made to move to a desired character key or function key by pressing one of the upper, lower, right and left ends of the four-way controller 1605, and this key is then "designated" simply by pressing the center of the four-way controller 1605. FIG. 19F shows the display screen directly after inputting the hiragana "ki", or similarly inputting the hiragana "no", "u", and "wa".An underline is provided at the character string "Yesterday was ", and it is shown that the character string is as yet in an indeterminate state. When the conversion key 406 is pressed once in this state and no conversion candidate is selected, the character string is decided and underlining is removed. Further, a character string can also be decided by pressing a decide key 405 for a few seconds or a confirm key for confirming a no change state can be provided in addition to the decide key.

### (2) Changing the type of character inputted

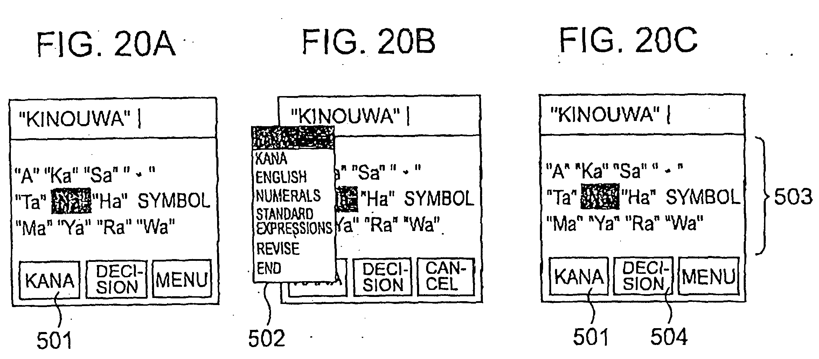

FIG. 20 is a view illustrating changes in content displayed in the display 1604 while changing the type of characters inputted at the information processing device of the embodiment 2.

First, a display screen for directly after inputting/confirming the character string "Yesterday was" as described above is shown in FIG. 20A. When the input character type key 501 is designated in this state, as shown in FIG. 20B, types of characters capable of being selected etc. are displayed at the input character type display area 502, as shown in FIG. 20B. The currently selected character type (in this example, "kana", i.e. katakana) is shown in reverse. FIG. 20C is a display screen for directly after "kana" (i.e. katakana) is selected from within these types of characters, with an indication that the input character type is katakana being displayed at the input character type key 501 thereafter and the character key set for katakana shown in FIG. 18C being displayed at the character key display area 503. In this state, the sequential character key is designated, and finally a katakana character string "Rachmaninoff" can be inputted and decided following on from the hiragana character string "Yesterday was" by designating the decide key 504.

### (3) Inputting Alphabetic Characters

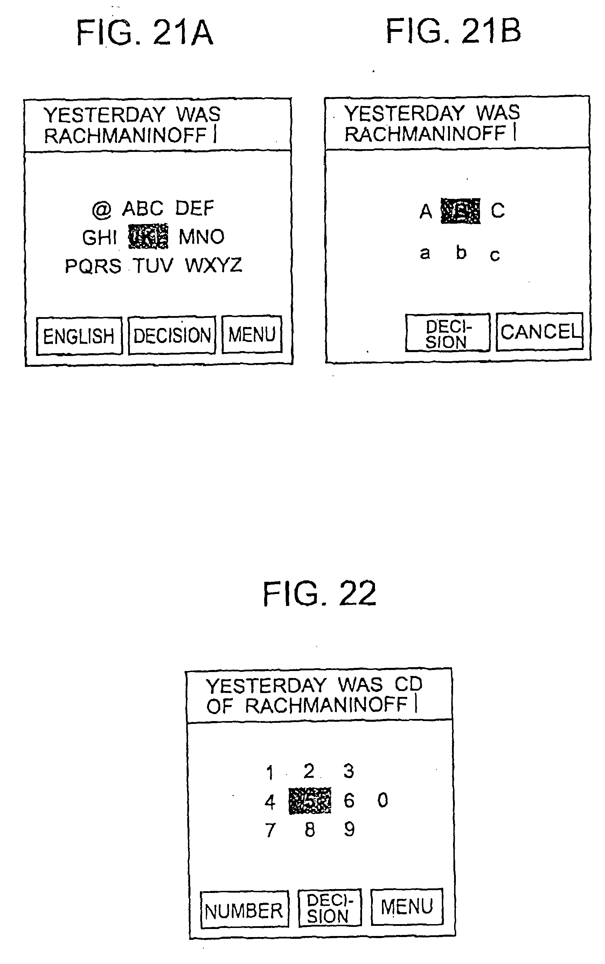

FIG. 21 is a view illustrating changes in content displayed in'the display 1604 while inputting the alphabetic character "C" at an information processing device of the embodiment 2. First, a display screen for directly after inputting/confirming the character string "Yesterday was Rachmaninoff" as described above and changing the input character type to "Eng" (i.e. English) is shown in FIG. 21A. FIG. 21B is a display screen for directly after the "ABC" key is designated in this state, with each of the character keys for the capital letters "A", "B" and "C" and the corresponding small case letters "a", "b" and "c" being displayed in a matrix. The English character "C" can then be inputted/confirmed so as to continue on after the character string "Yesterday was Rachmaninoff, CD" by designating the key "C".

### (4) Inputting Numerals

FIG. 22 is a view illustrating changes in content displayed in the display.1604 while inputting the number "2" at an information processing device of the embodiment 2. A display screen for directly after inputting/confirming the character string "Yesterday was Rachmaninoff, CD" as described above and changing the input character type to "Num." (i.e. Number) is shown in FIG. 22. The number "2" can then be inputted/confirmed so as to continue on after the character string " was Rachmaninov's CD" by designating the key "2".

According to the embodiment 2 described above, character input can be carried out using a software key on a screen. Hardware such as telephone push-buttons are therefore no longer necessary, and the device can therefore be made smaller and lighter in weight accordingly. The required keys can therefore be displayed in a manner which is easy to see even with a small display by adopting a hierarchical structure where rows are designated in a first layout and characters within the rows are then designated in a second layout, rather than simultaneously displaying all of the kana keys. Further, the character key is arranged in amatrix shape with the home position (initial position) of the cursor being in the vicinity of the center of the matrix. Movement to a certain character key can therefore be concluded with little cursor movement when that character key is near the home position and differences in operating a character key to be designated are relatively small when a certain character key which is further away is to be designated.

A desired kana can therefore be reached with fewer operations than normal compared to the related technology where telephone push-buttons are allotted to kana. Namely, in the related art, there are 10 kana such as the hiragana "a" and "ka" that can be reached by pressing their push-buttons once, 10 kana such as "i" and "ki" that can be reached by pressing twice, 10 kana that can be reached by pressing three times, 8 kana that can be reached by pressing four times, and 8 kana that can be reached by pressing 5 times. The means that the mean number of times a button is pressed to reach a desired kana is 2.87 times (={(1 x 10) + (2 x 10) + (3 x 10) + (4 x 8) + (5 x 8)}/46). However, in reality, it is common for buttons to be erroneously pressed so that the desired kana is passed and the other kana have to by cycled through to get back to the desired kana, which usually requires four more extra button operations. The actual mean number of times a button is pressed can therefore be considered to be substantially larger than the above figure. The above number also does not include operations of moving a finger from a certain button to another button (this is also a kind of operation). With the information processing device of the embodiment there is one kana such as the key for the hiragana "na" which can be reached without any operations (this is because the "na" key is in the home position of the cursor), there are four kanji such as "ka" which can be reached by pressing any of the up, down, left and right ends of the four-way controller 1605 once, there are eight kana such as "a" and "ni" that can be reached by pressing any of the up, down, left and right ends and central part of the four-way controller 1605 twice, 15 kana that can be reached with three presses, sixteen kana that can be reached by pressing four times, and two kana that can be reached with five presses. The mean number of times a key is pressed to reach the desired kanji is then 3.02 times (= {(0 x 1) + (1 x 4) + (2 x 8) + (2 x 8) + (3 x 15) + (4 x 16) + (5 x 2)}/46). This number is slightly higher (0.15 times) than the 2.87 times of the related art, and the number of times the same portion of the four-way controller 1605 is pressed in succession is a maximum of two times (in the case of moving from the "ya" key to the "wa" key, etc.), with there being little likelihood of the same operation being consecutively repeated and the possibility of the key being mistakenly pressed too many times being low. Further, even if there is an erroneous operation, revision of such an error does not require a key to be pressed four times and the actual mean number of times a key is pressed cannot be considered to rise substantially as in the case of the aforementioned number.

In the embodiment 2, the arrangement of the kana keys within the matrix is mechanically in the order of a fifty syllabary table. However, if, from experience, it appears that the frequency of use of the kana for the "sa character group" is high, and the frequency of use of the character "su" within the kana for the "sa character group" is also high, keys for characters such as "sa" and "su" can be located at the center of the matrix, i.e. at the home position of the cursor. In this manner, kana which are used often can be inputted using few key operations and the actual mean number of times a key is pressed can be further reduced.

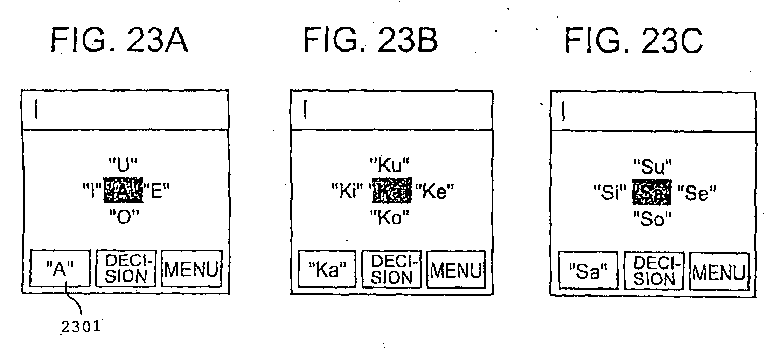

In the embodiment, for kana, in the case of a voiceless sound, a hierarchical designation method where a group is zoomed-in on and a certain character is designated after reaching a lower hierarchical layer is adopted, and in the case of palatalized sounds, a combination of a hierarchical input method where a plurality of pages are switched over between and the desired character is designated after reaching a lower hierarchical layer, and a parallel input method are adopted. However, kana can also be inputted in a completely parallel manner, as with symbols. FIG. 23 is a view illustrating changes in content displayed at the display 1604 while inputting kana in parallel at an information processing device of the present invention. The displayed character set can then be changed over in the order shown in FIG. 23A, FIG. 23B and FIG. 23C by designating the page changeover key 2301.

In the embodiment 2, for example, the character "ki" is inputted by designating the character key "ki". However, this can also be merged with so-called romaji input using the key "K" and the key "I" as normally carried out on a desktop computer etc.

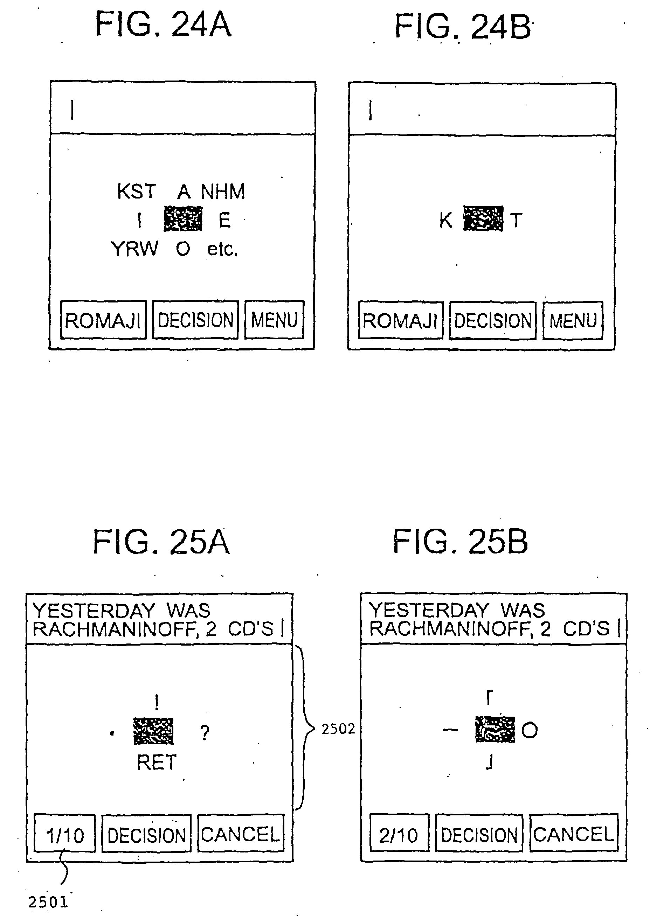

FIG. 24 is a view illustrating an example of content displayed at the display 1604 while inputting romaji at the information processing device of the present invention. The five vowels ("A", "I", "U", "'E", "O") and nine consonants ("K", "S", "T", "N", "H", "M", "Y", "R", "W") are displayed in a two-hierarchical matrix as shown in FIG. 24A and FIG. 24B. FIG. 24B shows the display screen for directly after the keys for "KST" are designated in the state in FIG. 24A.

The vowels, which are used much more frequently compared to consonants, can then be inputted using fewer key operations as a result of being arranged at the cross-shape centered about the home position in the matrix for the first layout shown in FIG. 24A. Further, several of the vowels are displayed collectively in the first layout shown in FIG. 24A, one of which can then be designated in the second layout shown in FIG. 24B.

In the information processing method described for the embodiment, a program pre-stored in the ROM 1602 is executed by the CPU 1601 but this program can also be stored on other storage media that can be read by a computer, such as a hard disc, floppy disc, CD-ROM, MO or DVD etc. The program is then read by computer and implemented as with the embodiment 2. This program can be distributed via the aforementioned storage medium or via a network such as the internet, etc.

### (Embodiment 3)

In the above-mentioned embodiment 2, a hierarchical character input method is adopted where a group (for example, "ka", "ra") of a first character set of a first layout is zoomed in on and characters (for example, "ki", "ra") within the group are zoomed in on in a second layout. However, when inputting characters such as characters that do not have the clear system and structure of the fifty syllabary table such as symbols, a parallel character input method such as described in the following can also be adopted. Further, an appropriate combination of the hierarchical structure described above and the parallel input method described in the following can also be adopted for inputting palatalized sounds, assimilated sounds (germinated consonants), voiced consonants, and semi-voiced consonants, even for kana.

The hardware configuration and functional structure of the information processing device of the embodiment 3 are the same as for the first embodiment shown in FIG. 16 and FIG. 17 and are therefore not described in detail here.

Next, a detailed description of a process for making character strings with the information processing device of the embodiment 3 of the present invention is given taking an example where a sentence "∼3" is made so as to follow on from the sentence "Yesterday was Rachmaninov, 2 CDs" made in the embodiment 2.

### (3-1) Inputting Symbols

FIG. 25 is a view illustrating changes in content displayed in the display 1604 while inputting the symbol "∼" at the information processing device of the embodiment 3. First, a display screen for directly after inputting/confirming the character string "Yesterday was Rachmaninov, 2 CD's" as described above and changing the input character type to "symbol" is shown in FIG. 25A. Numeral 2501 represents a page switching key, with (1/10) showing that the total number of symbol character key sets is 10, and showing that that displayed at the current character key display area 2502 is the first (first page). When the page switching key 2501 is designated in this state, a character key set selector 1703b selects the character key set for the second page of symbols from the character key set storage unit 1703a, and instructs the display unit 1604 so that this character set is displayed. FIG. 25B shows the display screen immediately after the display unit 1704 updates the character key display area 2502 in accordance with the definition of the newly selected character key set. The user can then input and confirm the desired symbol "∼" by designating the "∼" key.

### (3-2) Inputting kana (palatalized sounds, assimilated sounds)

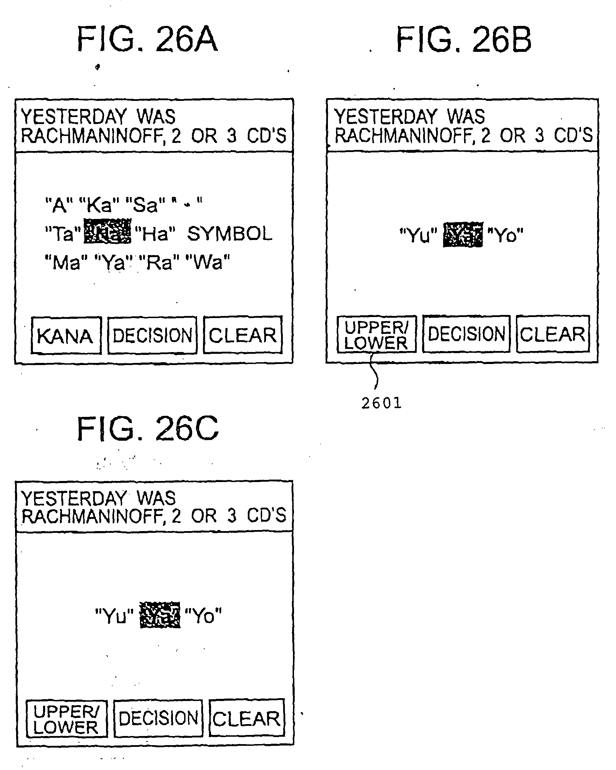

FIG. 26 is a view illustrating changes in content displayed in the display 1604 while inputting the hiragana palatalized sound "yo" at an information processing device of the embodiment 3.

First, a display screen for directly after inputting/confirming the character string "Yesterday was Rachmaninoff, 2 ∼ 3" as described above followed by inputting of the hiragana "ki" is shown in FIG. 26A. When the "ya" key is designated in this state; the display screen becomes as shown in FIG. 26B. Numeral 2601 represents the same kind of page switching key as the page switching key 2601. The display can then be switched over between a corresponding lower case character set when the character keys currently displayed are upper case characters and a corresponding upper case character key set when lower case characters are displayed, by designating the page switching key 2601. FIG. 26C shows the display screen directly after the page switching key 2601 is designated in the state shown in FIG. 26B, with it then being possible to input the desired character "yo". The above gives an example of palatalized sounds, but upper case and lower case character sets can also be switched over between for input using the page switching key 2601 in a similar manner for assimilated sounds.

### (3-3) Converting character strings

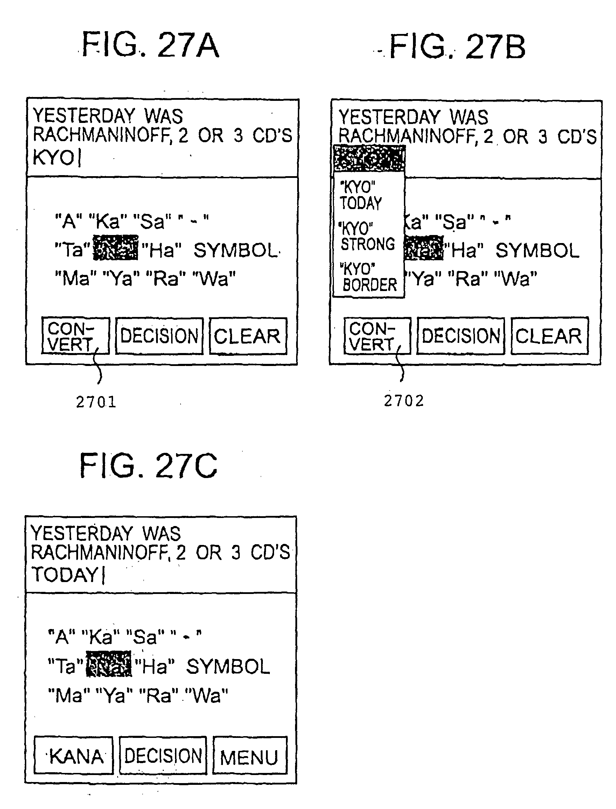

FIG. 27 is a view illustrating changes in content displayed in the display 1604 while a hiragana character string "today" is changed by the character string converter 1703c to a kanji character string "today (in kanji)" at the information processing device of the embodiment 3. First, a display screen for directly after inputting the indeterminate character string "Today (in hiragana)" as described above is shown in FIG. 27A. When a conversion key 2701 is designated in this state, as shown in FIG. 27B, the character string subjected to the conversion is displayed in reverse, and this conversion candidate is displayed at a conversion candidate display area 2702. FIG. 27C shows the display screen just after "today (kanji)" is designated from within the conversion candidates. The character string "today (kanji) " is then underlined and it is shown that the character string is confirmed.

### (3-4) Inputting kana (voiced consonants, semi-voiced consonants)

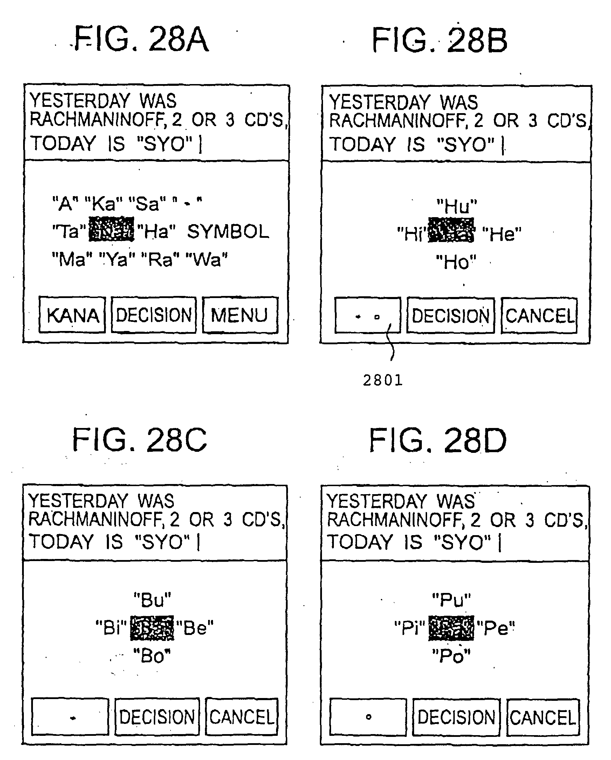

FIG. 28 is a view illustrating changes in content displayed in the display 1604 while inputting the katakana semi-voiced consonant "pa" at the information processing device of the embodiment 3. First, a display screen for directly after inputting/confirming the character string "Today is Rachmaninov, 2 ∼ 3 CD's" as described above is shown in FIG. 28A. When the "ha" key is designated in this state, the display screen becomes as shown in FIG. 28B. Numeral 2801 represents the same kind of page switching key as the page switching keys 2501 and 2601. The display can then be switched over between a corresponding voiced consonant character set when the character keys currently displayed are for voiceless sounds, a corresponding semi-voiced consonant character set when the character keys currently displayed are for voiced consonants, and a corresponding voiced sound character key set when semi-voiced consonants are displayed, by designating the page switching key 2801. FIG. 28C shows a display screen for directly after the page switching key 2801 is designated in the state in FIG. 28B. When the page switching key 2801 is designated again in this state, the display screen becomes as shown in FIG. 28D and the desired character "pa" can then be inputted.

The desired sentence "∼ 3 CD's, today is Chopin, " can then be made so as to follow on from "Yesterday was " by inputting and confirming the katakana "un" and the hiragana "no" in a similar manner.

In the embodiment 3, pages are switched over between using a key on the display 1604 but switching over can also be carried out by providing a button as hardware and then pressing this button.

According to the embodiment 3 described above, in cases such as with symbols, where a large number of characters exist which are difficult to classify in a definite manner for a single character type, or with kana, where a plurality *of* classifications such as unvoiced sounds, palatalized sounds, assimilated sounds, voiced consonants, and semi-voiced consonants exist for a single character, this large number of characters can be displayed at a limited display screen in a manner that is easy to understand.

A user can then easily retrieve and designate desired characters by switching over between the pages using a straightforward operation without having to remember which push button of which number an individual character is allotted to.

In the embodiment 3, for kana, in the case of a voiceless sound, a hierarchical designation method where a group is zoomed-in on and a certain character is designated after reaching a lower hierarchical layer is adopted, and in the case of palatalized sounds, a combination of a hierarchical input methodwhere a plurality of pages are switched over between and the desired character is designated after reaching a lower hierarchical layer, and a parallel input method are adopted. However, kana can also be inputted in a completely parallel manner, as with symbols.

In the information processing method described for the embodiments 1 to 3, a program pre-stored in the ROM 1602 is executed by the CPU 1601 but this program can also be stored on other storage media that can be read by a computer, such as a hard disc, floppy disc, CD-ROM, MO or DVD etc. The program is then read by computer and implemented as with the embodiments 1 and 2. This program can be distributed via the aforementioned storage medium or via a network such as the internet, etc.

As described above, according to the first aspect of the invention, an information processing device comprises character group display means for displaying a plurality of character groups at the same time, first direction indication input means and second direction indication input means for inputting direction indications, character group selection means for selecting one of the character groups displayed by the display means by causing movement to a selection position in response to direction indication input by the first direction indication input means, and character selection display means for sequentially selecting one of the characters included in the character group selected by the character group selection means in response to direction indication input by the second direction indicating input means, which means that it is not necessary to provide a large number of keys corresponding to each character group, it is not necessary to find which keys correspond to the desired character, and it is no longer necessary to press the keys a lot of times when a key is pressed in an erroneous manner, and thus the device can be miniaturized and character input is straightforward.

Further, since an information processing device of the second aspect of the present invention is the information processing device of the first aspect of the present invention, further comprising alphabetic character display means for switching between upper case and lower case characters in response to a direction indication input by the second direction indication input means to display a plurality of alphabetic characters at once, and alphabetic character selection means for causing movement to a selected position in response to a direction indication input using the first direction indication input means and selecting one among the alphabetic characters displayed on the alphabetic character display means, it is also possible to simply switch between input of upper case and lower case alphabetic characters, and character input is straightforward.

Further, according to the third aspect of the invention, since there are included a character group display step for displaying a plurality of character groups at one time, a first direction indication input step for inputting a direction indication, a character group selection step for causing movement to a selected position in response to a direction indication input in the first direction indication input step, and selecting one among the character groups displayed in the character group display step, a second direction indication input step for inputting a direction indication, and a character selection display step for sequentially selecting and displaying any one among characters included in the character group selected in the character group selection step, in response to a direction indication input in the second direction indication input step, it is not necessary to provide a large number of keys corresponding to each character group, it is not necessary to find which keys correspond to the desired character, and it is no longer necessary to press the keys a lot of times when a key is pressed in an erroneous manner, and thus the device can be miniaturized and character input is straightforward.

Also, since according to the fourth aspect of the invention, in addition to the character input method of the third aspect of the present invention, there are further included an alphabetic character display step for switching between upper case and lower case characters in response to a direction indication input in the second direction indication input step to display a plurality of alphabetic characters at once, and an alphabetic character selection step for causing movement to a selected position in response to a direction indication input in the first direction indication input step, and selecting one among the alphabetic characters displayed in the alphabetic character display step, the device can be miniaturized and character input is straightforward.

According to the fifth aspect of this invention, with an information processing device for displaying character keys for inputting characters at a display screen, a first display means displays character keys corresponding to kana positioned at an uppermost group of a fifty syllabary table at the display screen in a matrix shape. The designating means then designates one of the character keys displayed by the first display means. The second display means then displays character keys corresponding to kana positioned at the same line as kana corresponding to character keys designated by the designating means at the display screen in a matrix shape. The character keys are then displayed divided between a two-hierarchical matrix and an operator can then effectively search for and designate desired keys. when there is only a small number of individual matrix elements (i.e. a small number of character keys), the display for displaying these keys can also be made small. Further, character input is carried out using software keys on a screen. Hardware such as a keyboard and push-buttons etc. is therefore no longer required. An information processing device capable of inputting characters both easily and effectively with superior portability and a minimum of hardware can therefore be provided.

According to the sixth aspect of this invention, with an information processing method for displaying character keys for inputting characters at a display screen, a first display step displays character keys corresponding to kana positioned at an uppermost group of a fifty syllabary table at the display screen in a matrix shape. The designating step then designates one of the character keys displayed in the first display step. The second display step then displays character keys corresponding to kana positioned at the same line as kana corresponding to character keys designated by the designating step at the display screen in a matrix shape. The character keys are displayed divided between a two-hierarchical matrix and an operator can then effectively search for and designate desired keys. When there is only a small number of individual matrix elements (i.e. a small number of character keys), the display for displaying these keys can also be made small. Further, character input is carried out using software keys on a screen. Hardware such as a keyboard and push-buttons etc. is therefore no longer required. An information processing method capable of inputting characters both easily and effectively with superior portability and a minimum of hardware can therefore be provided.

Further, according to the seventh aspect of the invention, at an information processing device for displaying character keys for inputting characters on a display screen, a storage means classifies a plurality of character keys corresponding to symbols into a plurality of groups for storage. A designating means then designates one of a plurality of groups stored in the storage means, and a display means displays character keys classified into groups designated by the designating means at the display screen. Character keys corresponding to symbols are displayed divided between a plurality of pages that can be switched over so that an operator can effectively find and designate the required key. When there is only a small number of individual page elements' (i.e. a small number of character keys), the display for displaying these keys can also be made small. Further, character input is carried out using software keys on a screen. Hardware such as a keyboard and push-buttons etc. is therefore no longer required. An information processing device capable of inputting characters both easily and effectively with superior portability and a minimum of hardware can therefore be provided.

Further, according to the eighth aspect of the invention, at an information processing device for displaying character keys for inputting characters on a display screen, a storage means classifies character keys corresponding to kana into groups of voiceless sounds, palatalized sounds, assimilated sounds, voiced consonants, and semi-voiced consonants for storage. A designating means then designates one of a plurality of groups stored in the storage means, and a display means displays character keys classified into groups designated by the designating means at the display screen. Character keys corresponding to symbols are displayed divided between a plurality of pages for voiceless sounds, palatalized sounds, assimilated sounds, voiced consonants, and semi-voiced consonants that can be switched over so that an operator can effectively find and designate the required key. When there is only a small number of individual page elements (i.e. a small number of character keys), the display for displaying these keys can also be made small. Further, character input is carried out using software keys on a screen. Hardware such as a keyboard and push buttons etc. is therefore no longer required. An information processing device capable of inputting characters both easily and effectively with superior portability and a minimum of hardware can therefore be provided. Further, voiced consonants (for example, "ba") can then be inputted directly rather than inputting voiced characters (for example, "ba") as a combination of a voiceless character (for example "ha") and a voiced symbols (for example, "#"). This means there is no confusion when inputting and there are few inputting mistakes.

According to the ninth aspect of the invention, by storing a program for causing execution of the method described in the third, fourth, sixth, or eighth aspects of the invention on a computer, this program can be read by a machine and there is provided a storage medium capable of implementing the method described in the third or fourth aspects of the invention using a computer.

## Claims

1. An information processing device for displaying character keys for inputting characters on a display screen, comprising: character group display means for displaying a plurality of character groups at one time;
first direction indication input means and second direction indication input means for inputting a direction indication;
character group selection means for causing movement to a selected position in response to a direction indication input using the first direction indication input means, and selecting any one among the character groups displayed on the character group display means; and
character selection display means for sequentially selecting and displaying any one among characters included in the character group selected using the character group selection means, in response to a direction indication input using the second direction indication input means.

2. The information display means for displaying character keys for inputting characters on a display screen according to claim 1, further comprising:
alphabetic character display means for switching between upper case and lower case characters in response to a direction indication input using the second direction indication means and displaying a plurality of alphabetic characters at the same time; and
alphabetic character selection means for causing movement to a selected position in response to a direction indication input using the first direction indication input means, and selecting one among the alphabetic characters displayed on the alphabetic character display means.

3. An information processing method for displaying character keys for inputting characters on a display screen, comprising:
a character group display step for displaying a plurality of character groups at one time;
a first direction indication input step and a second direction indication input step for inputting a respective direction indication;
a character group selection step for causing movement to a selected position in response to a direction indication input in the first direction indication input step, and selecting one among the character groups displayed in the character group display step; and
a character selection display step for sequentially selecting and displaying any one among characters included in the character group selected in the character group selection step, in response to a direction indication input in the second direction indication input step.

4. An information processing method according to Claim 3, further comprising:
an alphabetic character display step for switching between upper case and lower case characters in response to a direction indication input in the second direction indication step and displaying a plurality of alphabetic characters at the same time; and
an alphabetic character selection step for causing movement to a selected position in response to a direction indication input in the first direction indication input step, and selecting one among the alphabetic characters displayed in the alphabetic character display step.

5. An information processing device for displaying character keys for inputting characters on a display screen, comprising:
first display means for displaying character keys corresponding to a plutality of character groups at a display screen as a matrix;
designating means for designating one character key of character keys displayed by the first display means; and
second display means for displaying character keys corresponding to the character group corresponding to the character key designated by the designating means at the display screen as a matrix.

6. An information processing method displaying character keys for inputting characters on a display screen, comprising:
a first displaying step of displaying character keys corresponding to a plurality of character groups at a display screen as a matrix;
a designating step of designating one character key of character keys displayed in the first displaying step; and
a second displaying step for displaying character keys corresponding to the character group corresponding to a character key designated in the designating step at the display screen as a matrix.

7. An information processing device for displaying character keys for inputting characters on a display screen, comprising:
storage means for classifying a plurality of character keys into a plurality of groups for storage;
designating means for designating one of a plurality of groups stored in the storage means; and
display means for displaying character keys classified into groups designated by the designating means at the display screen.

8. An information processing method displaying character keys for inputting characters on a display screen, comprising:
storing step classifying a plurality of character keys into a plurality of groups for storage;
designating step designating one of a plurality of groups stored in the storing step; and
displaying step displaying character keys classified into groups designated by the designating step at the display screen.

9. A computer-readable storage medium storing program for causing the computer to execute the method according to Claim 3.

10. A computer-readable storage medium storing program for causing the computer to execute the method according to Claim 4.

11. A computer-readable storage medium storing program for causing the computer to execute the method according to Claim 6.

12. A computer-readable storage medium storing program for causing the computer to execute the method according to Claim 8.
